# EUROPÄISCHE PATENTSCHRIFT

(11) **EP 3 009 762 B1**
(45) Veröffentlichungstag und Bekanntmachung des Hinweises auf die Patenterteilung: **14.03.2018**
(21) Anmeldenummer: 15020184.6
(22) Anmeldetag: 12.10.2015
(51) Int. Cl.: F24H 3/06, B65G 53/28, B65G 53/24, F23K 3/02

(54) **MOBILER WARMLUFTOFEN**
MOBILE HOT AIR STOVE
FOUR A AIR CHAUD MOBILE

(30) Priorität: 15.10.2014 DE 202014008158 U; 05.06.2015 DE 202015102920 U
(43) Veröffentlichungstag der Anmeldung: 20.04.2016
(73) Patentinhaber: LASCO Heutechnik GmbH, 5221 Lochen (AT)
(72) Erfinder: Landrichinger, Johannes, 5221 Lochen (AT)
(74) Vertreter: Heyerhoff Geiger & Partner Patentanwälte PartGmbB

(56) Entgegenhaltungen:
- EP-A1- 1 052 456
- EP-A1- 1 396 679
- EP-A1- 2 684 001
- WO-A1-2012/120369
- AT-A1- 507 742
- GB-A- 1 188 521

## Beschreibung

Die Erfindung betrifft einen mobilen Warmluftofen mit einer Brennkammer und einem Wärmetauscher.

Ein solcher mobiler Warmluftofen ist aus der WO 2012/120369 A1 bekannt. Er kann zur Heutrocknung, zur Trocknung eines Gebäudes, zur Beheizung eines Zelts oder eines Gebäudes oder für ähnliche Zwecke verwendet werden. Hierfür wird der Warmluftofen zu seinem Einsatzort gefahren, dort abgestellt und in Betrieb genommen. Nach Ende des vorgesehenen Betriebs wird der Warmluftofen wieder zurück in ein Lager oder zu einem nächsten Betriebsort gefahren. Zum Betrieb wird Festbrennstoff in der Brennkammer verbrannt, wobei die freigesetzte Wärme mit dem Rauchgas einem Wärmetauscher zugeführt wird. Zur Kühlung des Wärmetauschers kann dieser von einem Kühlluftstrom durchströmt werden, der die Wärme aus dem Wärmetauscher abführt und in einem Luftstrom in das Gebäude, das Zelt, einen Heutrocknungsraum oder dergleichen leitet.

Zum Betreiben des mobilen Warmluftofens an wechselnden Einsatzorten muss dieser jeweils an ein dort befindliches Festbrennstofflager angeschlossen werden, damit der Festbrennstoff aus dem Festbrennstofflager in den Warmluftofen gefördert werden kann. Eine solche Brennstoffförderung geschieht mit der Festbrennstoffförderanlage mit beispielsweise einer Schneckenförderung.

Aus der EP 1 052 456 A1 und der AT 5C7 742 A1 sind Saugfördersysteme zum Transportieren von Holzpellets von einem Brennstofflager zu einer stationären Festbrennstofffeuerungsanlage bekannt. Die Holzpellets werden mittels Unterdruck aus dem Brennstofflager gesaugt und durch einen Schlauch der Festbrennstofffeuerungsanlage zugeführt. Der Sog wird durch eine Turbine erzeugt, die an der Festbrennstofffeuerungsanlage angeordnet ist.

Es ist eine Aufgabe der vorliegenden Erfindung, einen mobilen Warmluftofen anzugeben, der auch über eine große Distanz einfach mit Festbrennstoff beschickbar ist.

Diese Aufgabe wird durch einen mobilen Warmluftofen der eingangs genannten Art gelöst, der erfindungsgemäß eine Brennstoffsaugfärderanlage aufweist mit einem Luftkreislaufsystem, das eine Festbrennstoffaufnahmeeinheit, einen Festbrennstoffabscheider und eine Unterdruckeinheit mit einem Seitenkanalverdichter zum Erzeugen eines Unterdrucks für einen pneumatischen Transport von Festbrennstoff durch einen Teil des Luftkreislaufsystems aufweist. Durch die pneumatische Förderung kann der Festbrennstoff, insbesondere Pellets, Hackschnitzel oder dergleichen, besonders einfach und zuverlässig auch über größere Strecken transportiert werden.

Der mobile Warmluftofen kann zur Beheizung von Räumen, eines ganzen Gebäudes, eines Zelts oder dergleichen verwendet werden. Geeignet ist er auch zur Erzeugung von Prozesswärme, z.B. für die Trocknung von landwirtschaftlichem Gut, wie Heu, Mais, Tierfutter, sowie zum Beheizen von Lackieranlagen und dergleichen.

Die Festbrennstoffaufnahmeeinheit kann ein Einfangbehälter mit zumindest einer Öffnung zum Einsaugen von Brennstoff aus einem Brennstofflager sein, das insbesondere über der Öffnung angeordnet ist. Der Brennstoff kann insofern aus dem Brennstofflager durch die Öffnung in den Einfangbehälter hinunterfallen. Dies kann ggf, durch ein Einsaugen des Brennstoffs durch einen im Einfangbehälter gegenüber dem Brennstofflager herrschenden Unterdruck unterstützt werden. Die Festbrennstoffaufnahmeeinheit kann jedoch auch ohne Behälter ausgeführt sein, beispielweise als Saugrüssel in einem Brennstofflager, insbesondere verbunden mit einem Blasauslass zum Auflockern des Brennstoffs vor dem Eingang des Saugrüssels.

Insofern wird die oben genannte Aufgabe auch dadurch gelöst, dass der mobile Warmluftofen einen Einfangbehälter mit zumindest einer Öffnung zum Einsaugen von Brennstoff aus einem Brennstofflager und eine Unterdruckeinheit aufweist, die über eine Saugleitung mit dem Einfangbehälter verbunden ist. Die Unterdruckeinheit kann eine Saugpumpe zum Erzeugen eines Unterdrucks aufweisen. Der Festbrennstoffabscheider dient zum Abscheiden von Brennstoff aus einem Luftstrom. Über eine Brennstoffzuführung vom Abscheider zur Brennkammer kann der Festbrennstoff der Brennkammer zugeführt werden. Weiter ist ein Ventil zwischen Abscheider und Brennstoffzuführung zweckmäßig zum Erzeugen eines Druckgefälles von der Brennstoffzuführung zum Abscheider.

Bei einem mobilen Warmluftofen wird Luft, insbesondere Umgebungsluft, zur Kühlung des Wärmetauschers durch den Wärmetauscher hindurchgeblasen. Hierfür umfasst der mobile Warmluftofen zweckmäßigerweise einen Umgebungslufteinlass, einen Umgebungsluftauslass, beides im Außengehäuse der Feuerungsanlage, und eine Warmluftführung vom Umgebungslufteinlass durch eine Kaltseite des Wärmetauschers zum Umgebungsluftauslass. Zweckmäßigerweise ist ein Umgebungsluftgebläse beziehungsweise Warmluftgebläse zum Treiben von Umgebungsluft durch die Kaltseite des Wärmetauschers vorhanden. Das Umgebungsluftgebläse, das die Umgebungsluft in das Gehäuse der Feuerungsanlage und wieder aus diesem herausdrückt, ist zweckmäßigerweise einem Abstand bis ein Gebläseradius vom Umgebungslufteinlass angeordnet. Die Umgebungsluftführung verläuft zweckmäßigerweise durch den Wärmetauscher und insbesondere auch zumindest seitlich um die Brennkammer herum, um auch diese zu kühlen.

Der Umgebungslufteinlass und der Umgebungsluftauslass sind zweckmäßigerweise in einander gegenüberliegenden Seiten eines Gehäuses der Feuerungsanlage angeordnet. Hierbei können der Umgebungslufteinlass und der Umgebungsluftauslass zumindest teilweise auf gleicher Höhe angeordnet sein. Möglich ist auch, dass der Umgebungslufteinlass in seinem geometrischen Schwerpunkt niedriger ist der Umgebungsluftauslass. Insbesondere liegt der gesamte Umgebungslufteinlass niedriger als der Umgebungsluftauslass, so dass kalte Luft von unten eingesogen wird und die Ausblasluft vor dem Ausblasen über/durch die besonders heißen Abschnitte von Wärmetauscher und insbesondere Brennkammer streichen kann.

In der Kaltseite des Wärmetauschers wird die eingeblasene Luft durch die Wärme aus der Heißseite des Wärmetauschers erhitzt, die von aus der Brennkammer kommendem Rauchgas erhitzt wird. Auf eine Wasserkühlung kann auf diese Weise verzichtet werden, sodass der mobile Warmluftofen leicht ausgeführt werden kann.

Die Mobilität erhält der mobile Warmluftofen insbesondere durch eine tragende Konstruktion, in der die Brennkammer und der Wärmetauscher gelagert sind. Weiter ist in oder an der tragenden Konstruktion ein Rauchauslass zum Abführen von Rauchgas beziehungsweise Brenngasen, insbesondere nach oben, aus dem Warmluftofen vorhanden. Weiter ist es zweckmäßig, wenn ein Anhebeelement zum Anheben und Transportieren der tragenden Konstruktion vorhanden ist, wie beispielsweise ein oder mehrere Räder, eine Aufhängung oder Einschübe für die Gabel eines Gabelstaplers. Auf diese Weise kann der mobile Warmluftofen angehoben, gerollt beziehungsweise von einem Gabelstapler oder dergleichen in einfacher Weise transportiert werden. Zweckmä-ßigerweise ist die tragende Konstruktion mit Rädern für ein manuelles Bewegen der Feuerungsanlage ausgestattet. Vier Räder oder zwei Räder mit einer Stütze sind vorteilhaft.

Mithin ist der Warmluftofen dafür vorgesehen, mithilfe eines Fahrzeugs an seinen Einsatzort transportiert, dort betrieben und später an einem anderen Einsatzort erneut betrieben zu werden. Die tragende Konstruktion umfasst zweckmäßigerweise einen Tragrahmen, mit Trägern, an denen Seitenwände gehäuseartig befestigt sind. Ebenfalls ist es möglich, dass die Träger durch Abkantungen von Gehäuse bildenden Wandflächen gebildet sind.

Der Wärmetauscher ist zweckmäßigerweise ein Gas-GasWärmetauscher mit einer Heißseite, durch die das heiße Rauchgas während des Betriebs des mobilen Warmluftofens geführt wird, und einer Kaltseite, durch die beispielsweise Ungebungsluft aus der Umgebung der Festbrennstofffeuerungsanlage geführt und dort erwärmt wird. Anschließend kann die Warmluft aus der Feuerungsanlage in die Umgebung oder in einen Luftkanal, wie einen Blechkanal oder einen Luftschlauch, geblasen werden.

Der Wärmetauscher ist zweckmäßigerweise ein Plattenwärmetauscher mit senkrecht oder waagerecht angeordneten Platten, zwischen denen die Umgebungsluft hindurchgeblasen wird. Das heiße Rauchgas strömt jeweils in den Platten, und zwar parallel durch die Platten und/oder sequentiell durch die Platten, insbesondere in einer S-Form durch eine Platte nach der anderen.

Weiter ist ein Festbrennstoffbrenner zum Verbrennen eines Biobrennstoffs vorhanden, also eines nicht fossilen Brennstoffs, beispielsweise von Hackschnitzeln oder Pellets. Außerdem umfasst der Warmluftofen zweckmäßigerweise eine Brennstoffzuführung mit einer automatischen Vorschubeinheit zum automatisierten Zuführen von Brennstoff in die Brennkammer, z.B. auf einen Brennboden. Ein Vorschubmotor der Vorschubeinheit kann von einer Steuereinheit gesteuert werden, insbesondere in Abhängigkeit eines Verbrennungsparameters, wie der Verbrennungstemperatur, der Abgastemperatur und/oder der Warmlufttemperatur. Die Steuereinheit ist zweckmäßigerweise dazu vorbereitet, den Verbrennungsbetrieb der Festbrennstofffeuerungsanlage zu steuern, die Verbrennung automatisch zu regeln und/oder einen sicherheitskritischen Parameter zu erkennen und eine Notabschaltung einzuleiten.

Die Brennkammer ist zweckmäßigerweise mit Brennkammersteinen ausgekleidet, beispielsweise Schamottsteinen, um eine hohe Rauchgastemperatur in der Brennkammer und damit eine schadstoffarme Verbrennung zu ermöglichen. Ein weiterer Vorteil ist die Schonung der Brennkammer-Außenhaut. Diese kann hierdurch aus einfachem Blech, z.B. Schwarzblech, gefertigt sein, so dass auf hochwärmefesten Edelstahl verzichtet werden kann. Die Schamottauskleidung kann den Brennraum zumindest seitlich umgeben. Die Brennkammer umfasst den Brennboden, der eine Fläche bildet, auf der in Betrieb der Feuerungsanlage die Verbrennung in der Brennkammer stattfindet.

Zum zuverlässigen Fördern des Festbrennstoffs ist ein großer Unterdruck vorteilhaft. Dieser kann durch eine hohe Drehzahl der Saugpumpe erreicht werden, wobei dies jedoch mit einer hohen Lärmentwicklung verbunden ist. Eine Geräuschentwicklung kann gering gehalten werden, da die Unterdruckeinheit beziehungsweise deren Saugpumpe einen Seitenkanalverdichter aufweist bzw. ist. Ein Seitenkanalverdichter umfasst ein Schaufellaufrad, das die Luft, die insbesondere axial zentriert einströmt, ansaugt. Die Luft wird anschließend durch Zentrifugalkraft im Schaufelrad nach außen gedrückt und hierdurch verdichtet. Über einen Seitenkanal kann die Luft zurück nach innen strömen und zwischen zwei weiteren Schaufeln nochmals komprimiert werden. Diese zweite Verdichtung ermöglicht wesentlich höhere Differenzdrücke im Vergleich zu üblichen Radiallüftern.

Zweckmäßigerweise ist der Seitenkanalverdichter dazu ausgeführt, einen Differenzdruck vom zumindest 300 mbar, insbesondere zumindest 400 mbar, zu erzeugen, insbesondere bei einem Luftvolumenstrom von zumindest 100 m³ pro Stunde, insbesondere zumindest 250 m³ pro Stunde.

Um einen erhöhten Luftvolumenstrom zu erreichen, ist es vorteilhaft, wenn der Seitenkanalverdichter ein zweiflutiger Seitenkanalverdichter ist. Bei dieser Bauform sind zwei parallel geschaltete Lufträder verbaut, die jeweils einstufig verdichten. Selbstverständlich ist es auch möglich, anstelle der parallel geschalteten Laufräder zwei in Reihe geschaltete Laufräder zu verwenden, sodass ein 2-stufiger Seitenkanalverdichter verwendet wird. Diese Bauweise ermöglicht eine Verdichtung von zumindest 500 mbar, insbesondere zumindest 600 mbar, insbesondere bei den oben genannten Volumenströmen.

Das Luftkreislaufsystem kann einen Überdruckbereich und einen Unterdruckbereich aufweisen, wobei sich die Drücke auf den Umgebungsdruck, also einen üblichen Luftdruck beziehen. Der Unterdruckbereich umfasst zweckmäßigerweise einen Saugzug mit einer Saugleitung, die von der Brennstoffaufnahmeeinheit zur Unterdruckeinheit, insbesondere bis zu einer Saugpumpe der Unterdruckeinheit, reichen kann.

Am Festbrennstoffabscheider ist zweckmäßigerweise die Saugpumpe der Unterdruckeinheit angeordnet. Bei dieser Anordnung kann ein gleichmäßiger Überdruck- und Unterdruckaufbau im Überdruckbereich beziehungsweise Unterdruckbereich bei einem Anlaufen der Saugpumpe erreicht werden. Starke Druckschwankungen in der Testbrennstoffaufnahmeeinheit und hierdurch auch in einem Festbrennstoffspeicher können hierdurch vermieden werden.

Der Festbrennstoffabscheider scheidet den Brennstoff aus beispielsweise im Luftkreislaufsystem umlaufender Luft aus. Besonders vorteilhaft ist hierbei ein Zyklonabscheider, der zum Abscheiden eine Wirbelkammer und einen zentrierten, nach oben gerichteten Luftausgang zum Abführen der wesentlichen brennstofffreien Luft aufweist.

Bei einer Saugförderung von Festbrennstoff ist die Zuführung des Festbrennstoffs zur Brennkammer oder zu einem Zwischenspeicher meist nur mit einem konstanten und nur ungenau einstellbaren Volumenstrom möglich, der von der Unterdruckeinheit und von geometrischen Gegebenheiten des Saugzugs abhängig ist. Um stets genügend Brennstoff zuführen zu können, ist die Unterdruckeinheit und diese Geometrie entsprechend groß ausgeführt. Wird jedoch, beispielsweise in einem Teillastbetrieb, nur wenig Brennstoff pro Zeit gebraucht, so kann dies durch ein Ein- und Ausschalten der Saugpumpe erreicht werden, sodass die Zuführung intervallweise erfolgt. Bei einer solchen Zuführung wird ein Zwischenlager zumindest teilweise gefüllt und der Füllstand wird durch einen Füllstandsensor überwacht. Fällt die zwischengespeicherte Brennstoffmenge unter einen Schwellwert, so wird die Saugpumpe angeschaltet und der Brennstoffstrom erneut in Gang gesetzt. Die Brennstoffförderung wird nach einer vorbestimmten Zeitdauer, beispielsweise 10 Sekunden, durch das Abschalten der Saugpumpe wieder unterbrochen, oder dann, wenn die Brennstoffmenge im Zwischenspeicher einen oberen Schwellwert übersteigt. Ein solcher Intervallbetrieb der Saugpumpe spart gegenüber einem konstant durchgehenden Betrieb der Saugpumpe Energie,

Je nach Motor und Geometrie der Saugpumpe kann es jedoch vorteilhaft sein, die Saugpumpe kontinuierlich zu betreiben und Förderstopps des Brennstoffs auf anderem Wege zu erzeugen. Hierdurch können langsamer laufende Motoren beziehungsweise Lüfterräder verwendet werden, sodass die Lärmbelastung der Umgebung reduziert werden kann. Der Intervallbetrieb der Festbrennstoffförderung wird hierbei zweckmäßigerweise durch ein oder mehrere Ventile gesteuert, die einen Unterdruck und/oder einen Überdruck im Luftkreislaufsystem verringern oder einen Brennstoffförderstrom blockieren.

Vorteilhafterweise weist der Saugzug eine in die Umgebung öffnende Belüftungsöffnung mit einem Ventil auf. Der Unterdruck im Saugzug kann hierdurch verringert und damit die Saugwirkung in der Festbrennstoffaufnahmeeinheit verringert beziehungsweise unterbunden werden. Der Brennstofftransport kann auch bei laufender Saugpumpe unterbunden werden.

Im Saugzug kann der Festbrennstoffabscheider angeordnet sein, sodass der Saugzug durch diese Einheit hindurch zur Saugpumpe reicht. Der Festbrennstoffabscheider umfasst zweckmäßigerweise einen Zwischenspeicher, in den der Festbrennstoff aus dem Luftstrom ausgeschieden wird. Zum Entleeren des Zwischenspeichers kann dieser an seinem unteren Ende eine Öffnung mit einem Schließmechanismus, im Folgenden vereinfacht als Ventil bezeichnet, aufweisen. Öffnet das Ventil, so fällt der Festbrennstoff nach unten aus den Zwischenspeicher aus.

Der Festbrennstoffabscheider mündet zweckmäßigerweise nach unten in einen Zwischenspeicher beziehungsweise Sammelbehälter zum Sammeln von Brennstoff. Der Sammelbehälter kann hierbei den Abscheider umgreifen, sodass dieser zumindest teilweise im Sammelbehälter angeordnet ist.

Vorteilhafterweise mündet der Festbrennstoffabscheider nach unten in einen mit Umgebungsdruck behafteten Raum, sodass der Unterdruck im Zwischenspeicher bei Öffnen des Ventils sinkt. Auf diese Weise kann auch durch ein Öffnen des Ventils und ein Ablassen des Festbrennstoffs der Unterdruck im Saugzug reduziert werden und hierdurch der Brennstoffstrom verringert beziehungsweise unterbunden werden.

Eine weitere Möglichkeit zur Anordnung einer Belüftungsöffnung des Saugzugs besteht in der Anordnung der Belüftungsöffnung zwischen der Saugpumpe und dem Festbrennstoffabscheider. Hierdurch kann verhindert werden, dass das Ablassen des Brennstoffs aus dem Zwischenspeicher durch einen starken gegenläufigen Saugstrom behindert wird.

Bei Anordnung einer Belüftungsöffnung lediglich im Saugzug kann es bei einer Öffnung der Belüftungsöffnung dazu kommen, dass in der Brennstoffaufnahmeeinheit und hierdurch auch in einem angrenzenden Brennstofflager ein unerwünschter Überdruck entsteht. Dieser kann entweder den Brennstoffspeicherbehälter belasten oder es kann vorkommen, dass Brennstoffstaub aus dem Lager ausgeblasen wird, was zu einer Beeinträchtigung der Umgebung führt. Um dies zu vermeiden, ist es vorteilhaft, eine Belüftungsöffnung im Überdruckbereich, also in einem Gebläsezug des Luftkreislaufsystems, vorzusehen. Der Gebläsezug kann von der Saugpumpe bis zur Festbrennstoffaufnahmeeinheit reichen. Durch ein Öffnen des in der Belüftungsöffnung angeordneten Ventils kann der Luftkreislauf unterbrochen oder zumindest so weit verringert werden, dass die Brennstoffförderung verringert beziehungsweise unterbunden wird.

Besonders vorteilhaft ist eine Belüftungsöffnung in Überdruckbereich innerhalb eines Staubfilters vorzusehen, insbesondere eines Staubfilters des Brennstoffabscheiders. Der Staubfilter kann abgeblasen und hierdurch gereinigt werden.

Zweckmäßigerweise ist sowohl an einem Saugzug als auch an einem Gebläsezug des Luftkreislaufsystems eine Belüftungsöffnung mit einem Ventil vorgesehen. Druckschwankungen in der Festbrennstoffaufnahmeeinheit können hierdurch gering gehalten werden.

Je nach Anwendung der Festbrennstoffsaugförderanlage können an dieser mehrere Warmluftöfen angeschlossen sein, beispielsweise zur Trocknung eines großen Gebäudes oder zur Beheizung einer großen Halle, eines großen Zelts oder dergleichen. Die Festbrennstoffaufnahmeeinheit kann mehrere Einlasse zum Anschluss mehrerer Luftkreislaufsysteme zu mehreren Warmluftöfen aufweisen. Die Festbrennstoffaufnahmeeinheit kann hierdurch mehrere beispielsweise mobile Warmluftöfen mit Brennstoff versorgen. Um bei einer solchen Konstellation nicht an jedem mobilen Warmluftofen eine Unterdruckeinheit vorsehen zu müssen, ist es vorteilhaft, eine Unterdruckeinheit an der Festbrennstoffaufnahmeeinheit vorzusehen. Durch zumindest ein Ventil kann die Saugleistung der Unterdruckeinheit auf jeweils eines oder mehrere Luftkreislaufsysteme geschaltet werden, sodass nicht alle Saugzüge von allen Luftkreislaufsystemen jeweils mit dem Unterdruck zum Saugen beziehungsweise Fördern des Brennstoffs beaufschlagt werden müssen. Hierdurch kann die Leistung der Unterdruckeinheit geringer gehalten bleiben.

In einer besonders einfachen Ausführungsform der Erfindung sind die mehreren Luftkreislaufsysteme gemeinsam durch eine als Seitenkanalverdichter ausgeführte Saugpumpe der Unterdruckeinheit geführt.

Zweckmäßigerweise ist vor und nach der Saugpumpe jeweils ein Ventil zum Schalten der Verdichterleistung auf genau einen der Luftkreislaufsysteme vorhanden. Hierdurch kann die ganze Leistung der Saugpumpe auf das eine Luftkreislaufsystem beschränkt werden.

Durch die Saugpumpe wird ein Unterdruck in der Unterdruckeinheit erzeugt. Bei einer Fehlfunktion eines Bauelements kann es vorkommen, dass sich der Unterdruck teilweise bis zur Brennkammer fortsetzt, also Rauchgase aus der Brennkammer durch die Saugpumpe abgesogen werden. Hierbei besteht die Gefahr einer Entzündung des Brennstoffs in einer Brennstoffzuführung zur Brennkammer.

Um die Fortsetzung des Unterdrucks auch bei einer Fehlfunktion zu verhindern, ist in einer vorteilhaften Ausführungsform der Erfindung eine Öffnung in einer Brennstoffzuführung zwischen der Brennkammer und dem Festbrennstoffabscheider angeordnet, die eine Druckausgleichsöffnung für die Brennstoffzuführung, insbesondere den Sammelbehälter, ist. Die Öffnung verbindet das Innere der Brennstoffzuführung zweckmäßigerweise mit der Umgebung der Festbrennstofffeuerungsanlage beziehungsweise dem mobilen Warmluftofen, sodass Luft entsprechend den Druckverhaltnissen zwischen dem Inneren der Brennstoffzuführung und der Umgebung frei durch die Öffnung strömen kann. Ein zuverlässiger Druckausgleich kann erreicht werden, wenn die Öffnung in ein Gehäuse um den Abscheider beziehungsweise des Zwischenbehälters eingebracht ist.

Außerdem ist die Erfindung gerichtet auf ein Verfahren zum Fördern von Festbrennstoff von einem Festbrennstoffspeicher zu einem mobilen Warmluftofen. Erfindungsgemäß wird der Festbrennstoff in einer am Festbrennstoffspeicher angeordneten Festbrennstoffaufnahmeeinheit durch einen von einer als Seitenkanalverdichter ausgeführten Saugpumpe einer Unterdruckeinheit erzeugten Sog aufgenommen, durch den Sog durch einen Saugzug eines Luftkreislaufsystems zu einem Festbrennstoffabscheider transportiert und dort aus dem Luftkreislaufsystem abgeschieden. Hierdurch kann Festbrennstoff in zuverlässiger Weise über große Strecken transportiert werden.

In einer vorteilhaften Ausführungsform der Erfindung werden durch von der Saugpumpe erzeugten Sog mehrere Warmluftöfen mit Festbrennstoff versorgt. Vorteilhafterweise wird die Saugpumpe anhand von Daten von mehreren Warmluftöfen angesteuert. Diese Daten können beispielsweise Füllstandsdaten von beispielweise einem Zwischenspeicher oder andere Steuerdaten sein.

Zweckmäßigerweise sind die Warmluftöfen jeweils mit einem Zwischenlager mit einem Füllstandsmesser ausgestattet. Hierbei werden Zwischenlager mit geringerem Füllstand vor Zwischenlagern mit höherem Füllstand mit Brennstoff beschickt.

Um eine niedrig drehende beziehungsweise leise Saugpumpe zu schonen, ist es vorteilhaft, wenn ein Transport des Festbrennstoffs durch das Luftkreislaufsystem unterbrochen wird, während die Saugpumpe in das Luftkreislaufsystem hinein pumpt, also in diesem einen Überdruck und/oder einen Unterdruck erzeugt. Es kann ein zumindest weitgehend kontinuierlicher Betrieb der Saugpumpe aufrechterhalten bleiben und die Saugpumpe hierdurch geschont werden.

Eine Möglichkeit zur Unterbrechung des Brennstofftransports besteht darin, dass ein Zwischenlager des Brennstoffabscheiders mit Festbrennstoff beschickt wird, während der Beschickung eine Entladeöffnung am unteren Ende des Zwischenlagers geschlossen bleibt, die Entladeöffnung bei laufender Saugpumpe geöffnet wird, hierdurch Luft durch die Entladeöffnung in den Saugzug einströmt und der von der Saugpumpe erzeugte Sog so weit reduziert wird, dass ein Brennstofftransport durch den Saugzug unterbrochen wird. Die Entladeöffnung wird hierbei zu einer Belüftungsöffnung des Saugzugs. Anschließend kann die Entladeöffnung wieder geschlossen werden, der Sog baut sich auf, und ein Transport beginnt durch den sich aufbauenden Sog wieder.

Eine weitere Möglichkeit zum Reduzieren des Transportdrucks im Luftkreislaufsystem besteht darin, dass während der Beschickung eines Zwischenlagers des Brennstoffabscheiders ein Ventil im Uberdruckbereich des Luftkreislaufsystems geöffnet wird, sodass von der Saugpumpe erzeugte Druckluft in die Umgebung abgeblasen wird. Der Transport wird reduziert und kommt schließlich zum Erliegen, wobei die Saugpumpe weiter in Betrieb bleiben kann.

Ebenfalls ist es möglich, einen Brennstoffstrom durch den Saugzug mithilfe eines steuerbaren Strömungswiderstands zu bremsen. Hierfür kann das Luftkreislaufsystem einen steuerbaren Strömungswiderstand aufweisen, der beispielsweise von einer Steuereinheit angesteuert wird. Der Strömungswiderstand kann ein Element aufweisen, das in das Luftkreislaufsystem eingefahren wird, sodass ein Transportquerschnitt an dieser Stelle des Luftkreislaufsystems verengt wird. Der Brennstoff verhakt an dieser Stelle, und es bildet sich ein Brennstoffstau, der den Brennstofftransport stoppt.

Zweckmäßigerweise erfolgt die Steuerung des Strömungswiderstands in Abhängigkeit eines Füllstands eines Zwischenlagers.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale sind im Rahmen der Ansprüche jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: einen mobilen Warmluftofen mit einer Brennkammer, einem Wärmetauscher und einer Umgebungsluftführung durch den Wärmetauscher,
- FIG 2: den mobilen Warmluftofen in einer perspektivischen Darstellung mit teilweise geöffnetem Außengehäuse,
- FIG 3: eine Festbrennstoffsaugförderanlage des mobilen Warmluftofens mit einer Festbrennstoffaufnahmeeinheit und einer Unterdruckeinheit,
- FIG 4: die Unterdruckeinheit mit teilweise geöffnetem Gehäuse,
- FIG 5: eine weitere Unterdruckeinheit mit einem teilgeöffneten Gehäuse und
- FIG 6: eine schematische Zeichnung einer Festbrennstoffaufnahmeeinheit mit einer daran angeschlossenen Unterdruckeinheit.

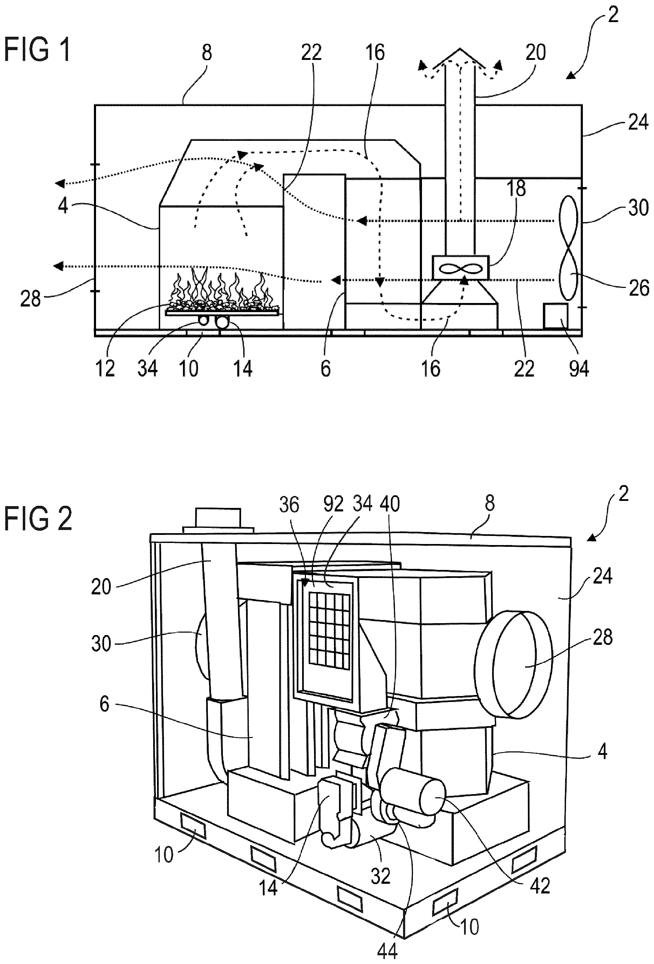

FIG 1 zeigt eine schematische Darstellung eines mobilen Warmluftofens 2, der für einen Transport zu mehreren verschiedenen Einsatzorten vorbereitet ist. Der Warmluftofen 2 umfasst eine Brennkammer 4 und einen Wärmetauscher 6, die in einer tragenden Konstruktion 8 mit einem Transportrahmen gelagert sind. Die tragende Konstruktion 8 umfasst an ihrem unteren Ende Anhebeelemente 10 in Form von Einschuböffnungen zum Einstecken der Gabel eines Gabelstaplers. Seitlich und oben ist der Transportrahmen gebildet durch Abkantungen der jeweiligen Seitenbleche beziehungsweise der Anlagendecke geformt, die zusammen mit dem Boden ein transportstabiles und wetterfestes Gehäuse 24 bilden.

FIG 1 zeigt den Warmluftofen 2 in einer stark vereinfachten und schematischen Weise, wobei auf betriebswesentliche Elemente, die jedoch für die Erläuterung der Erfindung unwesentlich sind, der Übersichtlichkeit halber verzichtet wurde. Der mobile Warmluftofen 2 hat in diesem Ausführungsbeispiel eine Nennleistung von 50 kW und ist mit Festbrennstoff, insbesondere Holz, befeuerbar. Zur Vereinfachung wird im Folgenden nur die Verwendung von Holzpellets genannt, wobei auch Hackschnitzel oder anderes Verbrennungsschüttgut möglich ist. Hierzu kann ein nicht dargestelltes Brennstofflager mit dem Warmluftofen 2 über eine Brennstoffzuführung verbunden werden, durch den der Festbrennstoff 12 zu einer Fördereinheit 14 gelangt, die in FIG 1 nur schematisch dargestellt ist. Die Fördereinheit 14 umfasst eine Förderschnecke, durch die der Brennstoff - gesteuert durch eine elektrische Steuereinheit - automatisiert in die Brennkammer 4 befördert wird.

Aus der Verbrennung des Festbrennstoffs 12 entstehende heiße Rauchgase werden nach oben hin aus der Brennkammer 4 abgeführt und durch eine Rauchgaszuführung 16 einer Heißseite des Wärmetauschers 6 von oben her zugeführt. Das Rauchgas wird von oben nach unten durch die Heißseite des Wärmetauschers 6 hindurchgeführt und gelangt zu einem Rauchgasgebläse 18. Das im Wärmetauscher 6 abgekühlte Rauchgas wird von diesem durch eine Rauchgasabführung 20 aus der Festbrennstofffeuerungsanlage 2 herausgeblasen.

Zum Abtransport der Verbrennungswärme aus dem Rauchgasstrom ist ein Kühlluftstrom in einer Umgebungsluftführung 22 in einer Gegenstromführung zur Rauchgaszuführung 16 geführt, er trifft also zunächst kühlere Anlagenteile und dann heißere Anlagenteile, sodass die an den kühleren Anlagenteilen erwärmte Luft an den heißeren Anlagenteilen nacherwärmt wird. Die Kühlluft wird als Außenluft beziehungsweise Umgebungsluft durch ein Umgebungsluftgebläse 26 unmittelbar von der Umgebung des Warmluftofens 2 eingesaugt und in das Außengehäuse 24 des Warmluftofens 2 eingeblasen. Das Umgebungsluftgebläse 26 ist in einer Einlassöffnung 30 des Außengehäuses 24 angeordnet. Innerhalb des Gehäuses 24 besteht also ein Überdruck relativ zur Umgebung des Warmluftofens 2.

Die Umgebungsluft wird in einer Umgebungsluftzuführung von der Einlassöffnung 30 zur Kaltseite des Wärmetauschers 6 geblasen und in dieser mit Wärme aus der Heißseite erhitzt. Anschließend umströmt sie die Brennkammer 4 und wird dort weiter erhitzt, bevor sie in einer Umgebungsluftabführung die Strecke von der Kaltseite des Wärmetauschers 6 bis zu einer Auslassöffnung 28 des Außengehäuses 24 zurücklegt und diese als Warmluft durchströmt und in die Umgebung geblasen wird. Die aus der Auslassöffnung 28 ausgeblasene erwärmte Umgebungsluft steht mit einer maximalen Nennleistung von 50 kW zur Verfügung, beispielsweise für die Gebäudeheizung, oder als Prozesswärme, z.B. für die Gebäudetrocknung, die Trocknung von landwirtschaftlichem Gut oder für das Beheizen von Prozessanlagen, z.B. Lackieranlagen. Die Brennkammer 4 wird durch den Kühlluftstrom gekühlt, sodass ihre Außentemperatur relativ kühl und für einen mobilen Einsatz geeignet bleibt.

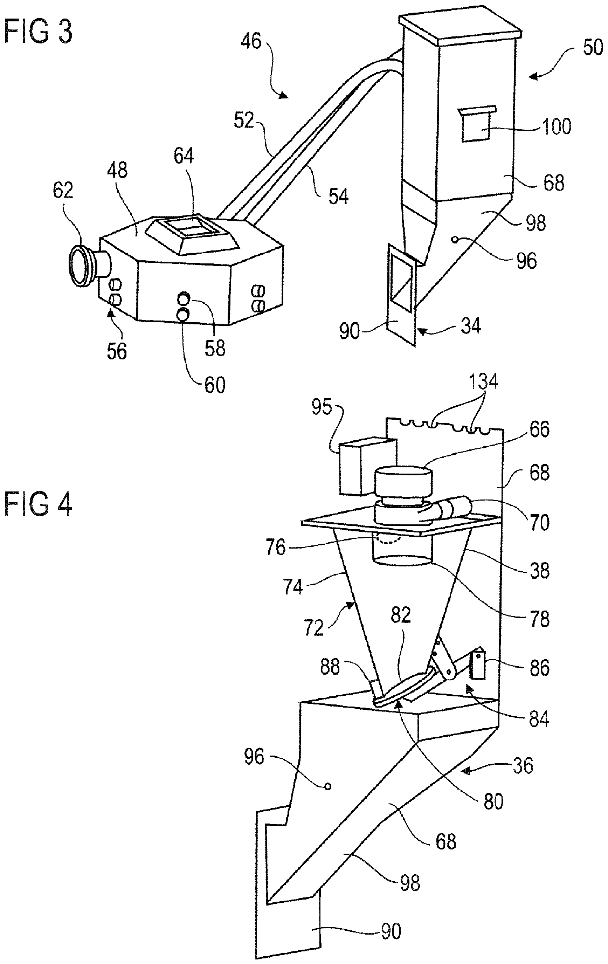

Wenn FIG 1 die Festbrennstofffeuerungsanlage von der einen Seite zeigt, wobei links vorne und rechts hinten ist, so zeigt FIG 2 die Festbrennstofffeuerungsanlage 2 in einer perspektivischen Ansicht schräg von der anderen Seite und von vorne. Zu sehen ist die Einlassöffnung 30, die Rauchgasabführung 20, der Wärmetauscher 6, die Fördereinheit 14 mit einem Fördermotor 32, die Brennkammer 4, das Außengehäuse 24 und die Auslassöffnung 28. Weiter ist der brennkammerseitige Teil einer Brennstoffschnittstelle 34 zu sehen, nämlich ein brennkammerseitiges Verbindungselement zum Anschluss an einen lagerseitigen Teil einer Brennstoffzuführung 36 zu einem Brennstofflager. Die Brennstoffschnittstelle 34 ist Teil der Brennstoffzuführung 36, die von einem Abscheider 38 (FIG 4) bis zur Brennkammer 4 reicht und zu einem Transport von Brennstoff, insbesondere Holzpellets, vom Abscheider 38 bis zur Brennkammer 4 dient. Unterhalb der Schnittstelle 34 ist eine Rückbrandsicherung 40 in Form einer Zellradschleuse angeordnet, die von einem Schleusenmotor 42 angetrieben wird. Unter dem Schleusenmotor 42 ist ein Primärluftgebläse 44 und deren Motor sichtbar.

FIG 3 zeigt eine Festbrennstoffsaugförderanlage 46, die an den mobilen Warmluftofen 2 angefügt werden kann, in einer perspektivischen Ansicht. Die Festbrennstoffsaugförderanlage 46 umfasst eine Festbrennstoffaufnahmeeinheit 48 und eine Unterdruckeinheit 50, die über eine Saugleitung 52 und eine Druckleitung 54 mit der Festbrennstoffaufnahmeeinheit 48 verbunden ist. Die Unterdruckeinheit 50, die Saugleitung 52, die Festbrennstoffaufnahmeeinheit 48 und die Druckleitung 54 bilden ein Luftkreislaufsystem, in dem Luft durch eine Saugpumpe 66 (FIG 4) der Unterdruckeinheit 50 zirkuliert wird.

Die Festbrennstoffaufnahmeeinheit 48 hat in diesem Ausführungsbeispiel sechs Ausgänge 56 mit jeweils einem Anschluss 58 für die Saugleitung 52 und einem Anschluss 60 für die Druckleitung 54. Der Anschluss für die Saugleitung 52 mündet nach innen in einen Saugrüssel, oder allgemeiner: eine Saugöffnung, in die der Brennstoff eingesogen wird. Der Anschluss 60 für die Druckleitung 54 mündet nach innen in einen Druckluftausgang zum Auflockern des Brennstoffs.

An einer Seite ist ein normierter Anschluss 62 für ein Pelletsfahrzeug vorhanden, durch den Pellets in einen Lastkraftwagen gesaugt werden können. Nach oben hin ist eine Öffnung 64 vorhanden, durch die Brennstoff in die Festbrennstoffaufnahmeeinheit 48 fällt. Die Festbrennstoffaufnahmeeinheit 48 ist dazu vorbereitet, unter oder am Boden eines Brennstoffspeichers angeordnet zu werden. Brennstoff aus dem Brennstoffspeicher fällt in die Öffnung 64 und kann aus der Festbrennstoffaufnahmeeinheit 48 herausgesaugt werden. Alternativ ist es möglich, auf eine behälterartige Festbrennstoffaufnahmeeinheit 48 zu verzichten und die Ein- und Ausgänge der Druckleitung 54 und Saugleitung 52 zu verwenden.

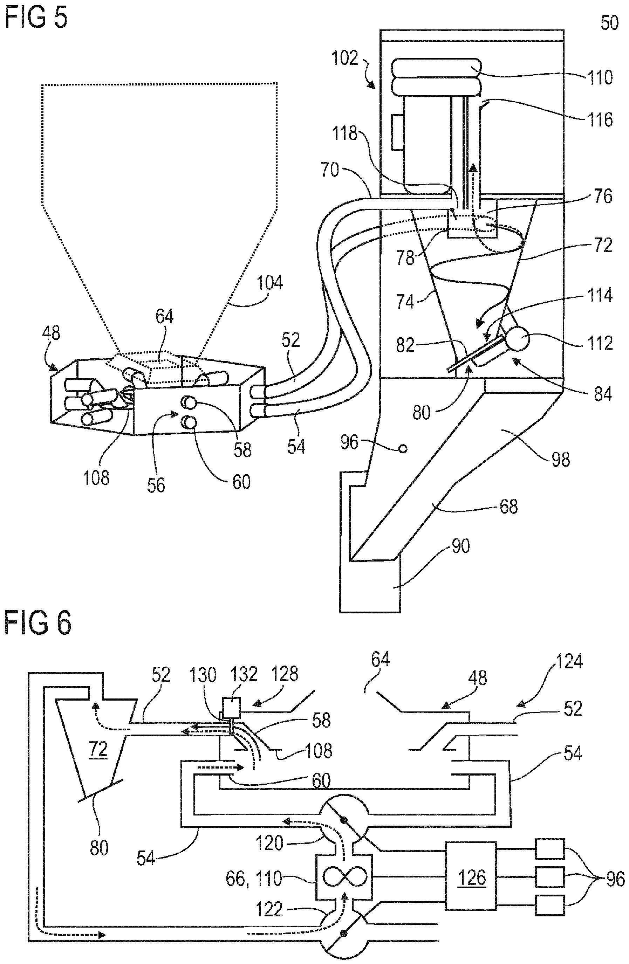

Hierzu ist die Unterdruckeinheit 50 mit der Saugpumpe 66 ausgerüstet, die in FIG 4 zu sehen ist. FIG 4 zeigt die Unterdruckeinheit 50 mit teilweise entferntem Gehäuse 68. Die Saugpumpe 66 ist eine Saugturbine mit einem bürstenlosen Gleichstrommotor und einem Radialgebläse mit Tangentialausgang. Da die Saugpumpe gemäß der Erfindung ein Seitenkanalverdichter ist, dient die folgende Beschreibung zur FIG 4 - nur insofern sie ausschließlich auf die Saugturbine als Saugpumpe 66 gerichtet ist - nur der ergänzenden Erläuterung und nicht zur Beschreibung der Erfindung. Gleiches gilt für die Beschreibung zur Fig. 6. Die Saugpumpe 66 ist unmittelbar über einem Festbrennstoffabscheider 72 in Form eines Zyklonabscheiders angeordnet, wobei auch eine andere Anordnung im Saugzugmöglich und vorteilhaft ist. Die Saugpumpe 66 umfasst einen Druckanschluss 70 in die Druckleitung 54 und eine nach unten in den Abscheider 72 gerichtete Saugöffnung. Die Saugöffnung ist umgeben von einem Filter 78, der Brennstoffbrocken, wie Pellets, abhält und Staub hindurch lässt.

Der Festbrennstoffabscheider 72 ist in FIG 4 mit nach vorne geöffnetem Gehäuse 74 dargestellt, sodass der Blick in das Innere des Abscheiders 72 frei wird. Der Abscheider 72 hat eine Saugöffnung 76 mit einem Sauganschluss zur Verbindung mit der Saugleitung 52. An seinem unteren Ende ist der Abscheider 72 mit einem Ventil 80 versehen, das eine Klappe zum Verschließen einer Entladeöffnung bzw. Belüftungsöffnung aufweist. Das Ventil 80 hat einen Verschlussdeckel 82 zum Abdichten des Abscheiders 72. Zwischen dem Gehäuse 84 und dem Verschlussdeckel 82 ist eine Dichtung angeordnet. nach unten und eine Bewegungsmechanik 84 zum Öffnen und Schließen des Verschlussdeckels 82. An einem Hebel der Bewegungsmechanik 84 ist ein Gewicht 86 angehängt, das mit seinem Eigengewicht den Verschlussdeckel 82 in Richtung einer Schließstellung drückt. In Gleichgewichtsstellung ist der Verschlussdeckel etwa 10 mm geöffnet. Ein am Gehäuse 74 befestigter Sensor 88 in Form eines Näherungssensors tastet die Nähe des Verschlussdeckels 82 ab und erkennt, ob der Verschlussdeckel 82 offen oder geschlossen ist.

Das Gehäuse 68 um den Abscheider 72 und nach unten bis zu einem lagerseitigen Verbindungselement 90 der Brennstoffschnittstelle 34 ist der lagerseitige Teil der Brennstoffzuführung 36. Das lagerseitige Verbindungselement 90 ist in Passung mit dem brennkammerseitigen Verbindungselement 92 der brennkammerseitigen Brennstoffzuführung 36, sodass beide Verbindungselemente 90, 92 gasdicht ineinander einfügbar sind.

Während des Betriebs der Festbrennstofffeuerungsanlage 2 wird die Saugpumpe 66 von einer in FIG 1 nur schematisch dargestellten Steuereinheit 94 angesteuert, die auch alle anderen elektrischen Aggregate des Warmluftofens 2 ansteuert und die Sensoren des Warmluftofens 2 ausliest und deren Signale zur Steuerung verwendet. Die Saugpumpe 66, 110 jedoch kann auch durch eine eigene Steuereinheit 95 gesteuert werden. In Fällen, in denen nur eine der Steuereinheit oder beide in Verbindung eine Steuerfunktion übernehmen, sind die Bezugszeichen 94, 95 gemeinsam genannt.

Die Saugpumpe 66 erzeugt einen Unterdruck im Abscheider 72, der sich durch die Saugleitung 52 in der Festbrennstoffaufnahmeeinheit 48 fortsetzt. Durch diesen wird Festbrennstoff aus dem Brennstofflager über der Festbrennstoffaufnahmeeinheit 48 durch die Saugleitung 52 und die Saugöffnung 76 in den Zyklonabscheider 72 gesaugt. Der Abscheider 72 trennt Brennstoff und Saugluft, und der Brennstoff fällt im Abscheider 72 nach unten auf das Ventil 80. Die Saugluft wird komprimiert und über die Druckleitung 54 in die Festbrennstoffaufnahmeeinheit 48 geblasen und lockert dort den Brennstoff von unten auf, sodass er sich leichter nach oben einsaugen lässt.

Durch den Unterdruck im Abscheider 72 wird der Verschlussdeckel 82 angezogen und verschließt das untere Ende des Abscheiders 72. Nach einer vorgegebenen Betriebszeit der Saugpumpe 66, z.B. 10 Sekunden, stoppt die Steuereinheit 94, 95 die Saugpumpe 66, der Unterdruck im Abscheider 72 bricht zusammen, der Verschlussdeckel 82 öffnet, der Brennstoff fällt durch die Entladeöffnung und gelangt in die Brennstoffzuführung 36. Bei leerer Brennstoffzuführung 36 fällt er nach unten bis auf die Rückbrandsicherung 40. Der Raum zwischen der Rückbrandsicherung 40 und dem Abscheider 72 dient als Zwischenspeicher 98, der aus dem Zyklonabscheider 72 von oben teilweise gefüllt wird. Der Füllstand bzw. ein Schaltfüllstand im Zwischenspeicher 98 wird von einem Füllstandssensor 96 erkannt. Wird der Schaltfüllstand unterschritten, so sendet der Füllstandssensor 96 ein Signal zur Steuereinheit 94, 95, die die Saugpumpe 66 startet. Durch den entstehenden Unterdruck im Abscheider 72 schließt der Verschlussdeckel 82 und der Fördervorgang beginnt von vorne bis der Füllstandssensor 96 "voll" meldet.

Der Start der Saugpumpe 66, 110 kann nach dem Signal des Füllstandssensors 96 um eine vorbestimmte Zeitdauer verzögert werden, beispielsweise um mehr als 1 Minute, insbesondere um mehr als 3 Minuten. Die Zeitdauer kann an eine Last des Warmluftofens angepasst sein, so dass die Zeitdauer umso größer ist, je kleiner die Last, also auch der Brennstoffverbrauch pro Zeit, ist. Durch die Verzögerung kann folgender Vorteil erreicht werden. Auf einer schrägen Fläche, wie der Unterseite des Gehäuses 68 bzw. Zwischenspeichers 98, können sich größere Mengen Brennstoffstaub absetzen. Dies kann den Brennstofffluss so weit verringern, dass Verstopfungen im Zwischenspeicher 98 entstehen, so dass vorhandener Brennstoff nicht nach unten abfließt, obwohl im darunterliegenden Bereich der Brennstoffzuführung 34 kein Brennstoff mehr ist. Es ist daher vorteilhaft, den Zwischenspeicher immer wieder vollständig, zumindest weitgehend vollständig zu leeren.

Hierzu kann der Sensor 96 ganz nach unten gelegt werden, so dass ein Befüllen erst nach weitgehend vollständiger Entleerung erfolgt. Allerdings wird das Befüllen sehr schnell wieder gestoppt, wenn der Sensor 96 weit unten angeordnet ist, so dass Förderpausen kurz sind und die Saugpumpe 66, 110 gegebenenfalls nicht genügend Zeit für eine Abkühlung zur Verfügung steht. Durch den Sensor 96 auf einer Höhe des Zwischenspeichers, bei der nach Entleerung auf dieser Höhe noch genügend Brennstoff im Zwischenlager ist, um einen Betrieb bei Volllast für mindestens 1 Minute, insbesondere mindestens 3 Minuten, aufrecht zu erhalten, kann mit nur einem Sensor 96 eine Schonung der Saugpumpe 66, 110 erreicht werden.

Während des Betriebs der Saugpumpe 66 kann es sein, dass der Verschlussdeckel 82 wegen eines Defekts oder klemmenden Brennstoffteilchens nicht ganz geschlossen ist. Dann wird Luft auf der Brennstoffzuführung 36 in den Abscheider 72 gesaugt und der Unterdruck aus dem Abscheider 72 setzt sich teilweise in die Brennstoffzuführung 36 fort. Um zu vermeiden, dass der Unterdruck Rauchgase aus der Brennkammer 4 in die Brennstoffzuführung 36 zieht, ist die Brennstoffzuführung 36 mit einer Öffnung 100 in die Umgebung des Warmluftofens 2 versehen. Durch diese Druckausgleichsöffnung 100 herrscht in der Brennstoffzuführung 36 um den Abscheider 72 stets im Wesentlichen Umgebungsdruck.

FIG 5 zeigt eine weitere Festbrennstoffsaugförderanlage 102, die in analoger Weise zum Anschluss an den mobilen Warmluftofen 2 ausgeführt ist, wie die Festbrennstoffsaugförderanlage 46, oder ein Teil des mobilen Warmluftofens 2 bilden kann. Die nachfolgende Beschreibung beschränkt sich im Wesentlichen auf die Unterschiede zum Ausführungsbeispiel aus den FIGen 3 und 4, auf das bezüglich gleich bleibender Merkmale und Funktionen verwiesen wird. Um nicht bereits Beschriebenes mehrfach ausführen zu müssen, sind alle Merkmale des vorangegangenen Ausführungsbeispiels übernommen, ohne dass sie erneut beschrieben sind, es sei denn, Merkmale sind als Unterschiede zum vorangegangenen Ausführungsbeispiel beschrieben.

Die Festbrennstoffsaugförderanlage 102 umfasst die gleiche Festbrennstoffaufnahmeeinheit 48, die jedoch in FIG 5 teilweise offen dargestellt ist, wobei der obere Teil und ein Seitenteil des Gehäuses fehlen, sodass ein Blick in das Innere der Festbrennstoffaufnahmeeinheit 48 frei wird. Oberhalb der Festbrennstoffaufnahmeeinheit 48 ist ein Festbrennstoffspeicher 104 gestrichelt angedeutet, der zur Festbrennstoffsaugförderanlage 102 gehören kann jedoch nicht muss, und in einfacher Weise an der Öffnung 64 angeordnet werden kann.

Zu sehen ist, dass der untere Anschluss 60 von der Druckleitung 54 offen in das Innere der Festbrennstoffaufnahmeeinheit 48 mündet. Darüber mündet der Anschluss 58 der Saugleitung 52, der einen kleinen Prallteller 108 (FIG 6) an seinem inneren Ausgang trägt. Der Prallteller 108 sorgt einerseits dafür, dass von oben kommende Pellets um den Prallteller 108 fließen müssen, um zur Saugöffnung der Unterdruckleitung 52 zu gelangen. Sie werden hierdurch aufgelockert, so dass einem Stau entgegengewirkt wird. Außerdem hat der Prallteller 108 den Effekt, dass die eingesaugte Luft von unten in den Anschluss 58 einströmt und nicht von oben um die Kanten des Anschlusses 58. Hierdurch wird die Einsaugwirkung verbessert.

Während des Betriebs fällt der Festbrennstoff, beispielsweise Pellets, aus dem Festbrennstoffspeicher 104 nach unten durch die Öffnung 64 in den inneren Raum der Festbrennstoffaufnahmeeinheit 48. In diesem Raum wird die Druckluft von der Saugpumpe 66 beziehungsweise der Saugpumpe 110 eingeblasen und lockert den davorliegenden Festbrennstoff auf. Durch den in der Saugleitung 52 von der Saugpumpe 66, 110 erzeugten Unterdruck wird der derart aufgelockerte Festbrennstoff nach oben weg- und in die Saugleitung 52 eingesaugt.

Wie beim vorhergehenden Ausführungsbeispiel wird der Festbrennstoff durch die Saugleitung 52 in den Brennstoffabscheider 72 gesogen und erreicht ihn durch die Saugöffnung 76. Der Festbrennstoff kreiselt im Zyklonabscheider 72, wie durch den spiraligen, durchgezogenen Pfeil in FIG 5 angedeutet ist. Die aus der Saugöffnung 76 in den Abscheider 72 strömende Saugluft verlässt den Abscheider 72 nach oben, wie durch den gestrichelten Pfeil in FIG 5 angedeutet ist. Sie passiert den Filter 78 und erreicht den Anschluss der Saugpumpe 66, 110. Von dieser wird sie durch den Druckanschluss 70 wieder zurück zur Festbrennstoffaufnahmeeinheit 48 geblasen, wodurch ein Luftkreislauf entsteht.

Bei dem in FIG 5 gezeigten Ausführungsbeispiel ist die Saugpumpe 110 ein zweiflutiger Seitenkanalverdichter. Dieser läuft erheblich langsamer als der mit 45.000 U/min drehende Lüfter der Saugpumpe 66. Durch die Seitenkanalverdichtung erzeugt der Seitenkanalverdichter 110 auch bei einer erheblich geringeren Umdrehung von dessen Radiallüfterrad den gleichen Überdruck in der Druckleitung 54 beziehungsweise den gleichen Unterdruck in der Saugleitung 52, wie die Saugpumpe 66, nämlich 500 mbar bei einer Luftförderleistung von 250 m³ pro Stunde.

Die Saugpumpe 110 weist einen Saugeingang und einen Druckausgang auf, die parallel zueinander geführt sind, wie in FIG 5 zu sehen ist. Um einen Druckwiderstand gering zu halten, sind Saugeingang und Druckausgang senkrecht geführt, der Saugeingang nach oben und der Druckausgang nach unten. Der Druckausgang durchläuft zudem den Innenraum des Abscheiders 72, insbesondere in den Innenraum des Filters 78, und kann in den Innenraum mit einem nur grob angedeuteten Ventil geöffnet werden.

Auch der Seitenkanalverdichter 110 kann mit dem oben beschriebenen Intervallmodus betrieben werden, also im Intervall eingeschaltet und ausgeschaltet werden. Einer hohen Lebensdauer der Saugpumpe 110 ist es jedoch zuträglich, wenn diese im Dauerbetrieb läuft. Hierzu sind verschiedene Betriebsverfahren möglich, die mit beiden Saugpumpen 66, 110 gleichermaßen durchführbar sind.

Ein Start eines Brennstofftransports kann durch ein Signal des Füllstandsensors 96 ausgelöst werden. Der Brennstoff innerhalb des Zwischenspeichers 98 ist somit unter den Schwellwert des Füllstandsensors 96 gefallen. Wie oben beschrieben, wird Festbrennstoff aus der Festbrennstoffaufnahmeeinheit 48 in den Abscheider 72 gefördert. Das Ventil 80 ist hierbei geschlossen, sodass der Unterdruck im Saugzug, der sich von der Saugpumpe 110 bis zur Festbrennstoffaufnahmeeinheit 48 erstreckt, erhalten bleibt.

Nach einer festgelegten Förderdauer von beispielsweise 10 Sekunden wird bei Weiterlaufen der Saugpumpe 110 das Ventil 80 geöffnet. Hierzu umfasst die Bewegungsmechanik 84 einen Ventilmotor 112, der ebenfalls von der Steuereinheit 94, 95 angesteuert wird. Dieser öffnet den Verschlussdeckel 82 des Ventils 80 gegen den Unterdruck, der im Abscheider 72 gegenüber der Umgebung des Warmluftofens 2 beziehungsweise der Festbrennstoffsaugförderanlage 46, 102 herrscht. Die vom Verschlussdeckel 82 bis dahin verschlossene Belüftungsöffnung 114 wird geöffnet. Von unten strömt Umgebungsluft, auch durch die Öffnung 100, in den Abscheider 72 und der Unterdruck in der Saugleitung 52 bricht weitgehend zusammen. Hierdurch wird die Brennstoffförderung gestoppt, wobei der im Abscheider 72 befindliche Brennstoff nach unten herausfällt.

Das Ventil 80 bleibt nun solange geöffnet, bis wieder Brennstoff gefördert werden soll, beispielsweise bis zu einem Signal des Füllstandsensors 96. Während des geöffneten Ventils 80 dreht die Saugpumpe 110 mit gleicher Drehzahl unvermindert weiter, sodass die Drehzahl gleichmäßig betrieben wird, auch über Förderpausen hinweg. Alternativ ist es möglich, die Drehzahl während der Förderpausen niedriger zu steuern als während der Förderperioden, wobei die Saugpumpe 110 auch während der Förderpausen dreht, wenn auch langsamer.

Um das Öffnen des Ventils 80 gegen den Unterdruck zu erleichtern und einen Luftstrom von unten entgegen der Fallrichtung des Brennstoffs zu vermindern, ist es möglich, anstelle oder zusätzlich zur Belüftungsöffnung 114 eine oder mehrere andere bzw. weitere in die Umgebung öffnende Belüftungsöffnung 116, 118 zu öffnen.

Eine Möglichkeit der Anordnung einer Belüftungsöffnung 116 ist zwischen der Saugpumpe 66, 110 und dem Abscheider 72. FIG 5 zeigt die Belüftungsöffnung 116 mit einem angedeuteten Ventil, das von der Steuereinheit 94, 95 angesteuert beziehungsweise betätigt wird. Soll die Brennstoffförderung unterbrochen werden, so öffnet das Ventil und damit die Belüftungsöffnung 116, sodass der Unterdruck im Abscheider 72 und damit auch im gesamten Saugzug bis zur Festbrennstoffaufnahmeeinheit 48 weitgehend zusammenbricht, wobei hierunter eine Verminderung des Unterdrucks um zumindest 70 Prozent verstanden werden kann. Der Ventilmotor 112 kann weniger stark ausgelegt sein und der Brennstoff fällt leichter durch die Öffnung 114 nach unten in den Zwischenspeicher 98.

Bei geöffneter Belüftungsöffnung 116 und laufender Saugpumpe 66, 110 wird unvermindert Luft durch die Druckleitung 54 in die Festbrennstoffaufnahmeeinheit 48 geblasen, sodass dort ein Überdruck entstehen kann. Ist dies nicht gewünscht, kann alternativ oder zusätzlich die Belüftungsöffnung 118 durch das in FIG 5 angedeutete Ventil unter Steuerung der Steuereinheit 94, 95 geöffnet werden. Der Überdruck wird abgeblasen, sodass auch in der Festbrennstoffaufnahmeeinheit 48 und dem Brennstoffspeicher 104 kein Überdruck entsteht. Werden beide Belüftungsöffnungen 116, 118 zum Erzielen eines Transportstopps geöffnet, so kann der Transport besonders sicher unterbunden, die Druckverhältnisse in der Festbrennstoffaufnahmeeinheit 48 und im Brennstoffspeicher 104 ausgeglichen gehalten und das Ventil 80 leicht geöffnet werden.

Eine Belüftungsöffnung 118 in der Druckleitung mit ihrem Ventil hat außerdem die Funktion, eine Reinigung des Filters 78 zu erleichtern bzw. zu automatisieren. Der Filter 78 kann ein Grobfilter sein, der zwar Holzstückchen und Pellets abhält, jedoch Staub hindurch lässt. Hierbei wird jedoch die Saugpumpe 66, 110 belastet, da der feine Staub sich störend in der Saugpumpe 66, 110 absetzen kann. Wird nur die Belüftungsöffnung 118 geöffnet, so wird der Saugeingang der Saugpumpe 66, 110 mit dem in FIG 5 links daneben liegenden, parallel verlaufenden Druckausgang kurzgeschlossen. Der Luftkreislauf im Luftkreislaufsystem wird unterbrochen und die Brennstoffförderung kommt zu erliegen. Wird hingegen auch die Belüftungsöffnung 116 geöffnet, so entsteht innerhalb des Filters 78 ein Überdruck. Hierdurch wird Luft von innen durch die Filterwände des Filters 78 geblasen und daran haftender Staub wird abgeblasen. Der Filter wird gereinigt und sein Strömungswiderstand wird verringert.

Alternativ ist es möglich, dass auch bei geschlossener oder nicht vorhandener Belüftungsöffnung 116 durch das Öffnen der Belüftungsöffnung 118 kurzzeitig eine ausreichende Druckwelle im Filter 78 entsteht, der den außen daran haftenden Staub in genügender Weise entfernt. Alternativ oder zusätzlich kann der Filter geschüttelt werden, z.B. mit einem Rüttelmotor, so dass der Staub abgeschüttelt wird.

Der von der Saugpumpe 66, 110 erzeugte Über- oder Unterdruck kann auch zur Kühlung der Saugpumpe 66, 110 verwendet werden. Hierzu hat das Gehäuse 68 um die Saugpumpe 66, 110 Öffnungen 134 in die Umgebung. Herrscht im Raum innerhalb des Gehäuses 68 um die Saugpumpe 66, 110 ein Über- oder Unterdruck, so fließt Luft um die Saugpumpe 66, 110 und kühlt diese.

Ein Unterdruck kann erreicht werden, wenn die Belüftungsöffnung 116 geöffnet ist. Hierbei kann die Belüftungsöffnung 118 geöffnet oder geschlossen sein. Ist sie geschlossen, so ist der Unterdruck besonders stark und eine hohe Kühlleistung kann erreicht werden. Ist sie offen, so ist die Kühlleistung geringer, es wird jedoch ein Überdruck im Brennstoffspeicher 104 vermieden.

Mithilfe der Belüftungsöffnungen 116, 118 können mehrere Effekte miteinander erreicht werden. Zum Fördern des Brennstoffs sind beide Belüftungsöffnungen 116, 118 geschlossen. Zum leichten Beenden der Förderung werden beide Belüftungsöffnungen 116, 118 geöffnet. Hierdurch entsteht ein Überdruck im Filter 78 und dieser wird gereinigt. Zweckmäßigerweise ist die Entleerungsöffnung des Abscheiders 72 hierbei noch geschlossen, so dass Staub innerhalb des Abscheiders 72 bleibt und nicht nach außen geblasen wird. Außerdem entsteht ein Überdruck im Abscheider 72, gegen den das Ventil 80 zunächst noch die Entleerungsöffnung geschlossen hält. Hat sich der Staub etwas abgesetzt, so kann die Entleerungsöffnung geöffnet werden und der Brennstoff in die Brennstoffzuführung 34 gegeben werden. Hierbei kann das Ventil 116 geschlossen sein, um ein Abblasen von Staub in die Umgebung zu verhindern. Später wird das Ventil 116 geöffnet und Luft durch die Öffnungen 134 eingesogen und die Pumpe 66, 110 gekühlt.

Während bei dem in den FIG 4 und FIG 5 gezeigten Ausführungsbeispiel für jeden Warmluftofen 2 eine eigene Saugpumpe 66, 110 vorhanden ist, auch wenn mehrere Saugförderanlagen 46, 102 an eine einzige Festbrennstoffaufnahmeeinheit 48 angeschlossen sind, ist bei dem in FIG 6 gezeigten Ausführungsbeispiel nur eine Saugpumpe 66, 110 für mehrere Warmluftofen 2 vorhanden.

FIG 6 zeigt eine alternative Anordnung der Saugpumpe 66, 110 an der Festbrennstoffaufnahmeeinheit 48. Wie aus FIG 3 und FIG 5 zu sehen ist, sind sechs Warmluftöfen 2 an die Aufnahmeeinheit 48 anschließbar. Entsprechend sind sechs Ausgänge 56 vorhanden. Dies ist in FIG 6 durch zwei Anschlüsse 58 und zwei Anschlüsse 60 angedeutet, die als jeweils sechs Anschlüsse 58, 60 gedeutet werden können.

Die an der Aufnahmeeinheit 48 angeordnete Saugpumpe 66, 110 ist über ein Ventil 120 druckseitig mit der Festbrennstoffaufnahmeeinheit 48 verbunden. Über das Ventil 120 kann gesteuert werden, welcher der Anschlüsse 60 mit Druckluft versorgt wird. Bei der in FIG 6 gezeigten Stellung des Ventils 120 wird die linke Druckleitung 54 mit Druckluft versorgt, wohingegen die rechte Druckleitung drucklos ist. Entsprechend besteht in der linken Saugleitung 52 Unterdruck, wohingegen die rechte Saugleitung 52 unterdrucklos ist. Die Luft wird, wie durch die gestrichelten Pfeile in FIG 6 angedeutet ist, im Kreislauf umgepumpt. Um auch die Saugseiten der mehreren Luftkreislaufsysteme schalten zu können, ist saugseitig der Saugpumpe 66, 110 ein weiteres Ventil 122 vorhanden. Hierdurch können die Saugleitungen der Luftkreislaufsysteme an die Saugpumpe 66, 110 angeschaltet beziehungsweise von dieser getrennt werden.

Bei dem in FIG 6 gezeigten Ausführungsbeispiel kann über eine Saugpumpe 66, 110 der Brennstoff aus der Aufnahmeeinheit 48 zu mehreren Warmluftöfen 2 gefördert werden. Hierbei kann die in FIG 6 gezeigte Festbrennstoffsaugförderanlage 124 auch Teil eines mobilen Warmluftofens 2 sein. Zur Steuerung der Ventile 120, 122 ist in diesem Ausführungsbeispiel eine Steuereinheit 126 vorhanden, die signaltechnisch mit jeweils einem Sensor 96 verbunden ist, der den Brennstoffstand im jeweiligen Zwischenspeicher 98 sensiert, wie oben beschrieben ist.

Da jeweils nur ein Luftkreislauf aktiv schaltbar ist, sucht die Steuereinheit 126 in Abhängigkeit von den Signalen der Füllstandsensoren 96 ein Luftkreislaufsystem aus und beschaltet dieses mit Überdruck und/oder Unterdruck, sodass Festbrennstoff durch das Luftkreislaufsystem zum jeweiligen Warmluftofen 2 gefördert wird. Wurde der betreffende Warmluftofen 2 ausreichend beschickt, so schaltet die Steuereinheit 126 die Ventile 120, 122 um, sodass ein anderes Luftkreislaufsystem aktiviert und das zuvor aktive deaktiviert wird. Selbstverständlich ist es auch möglich, anstelle nur eines Luftkreislaufsystems auch zwei oder mehr Luftkreislaufsysteme gleichzeitig zu aktivieren und die daran angeschlossenen Warmluftöfen mit Brennstoff beschicken zu können. Hierfür müssen die Ventile 120, 122 entsprechend mit mehreren Ausgängen versehen sein.

Eine Beschickungsunterbrechung kann durch die Belüftungsöffnungen 114, 116, 118 wie oben beschrieben erfolgen. Ebenso ist es möglich, dass eine Belüftungsöffnung zwischen der Saugpumpe 66, 110 und dem nachgeschalteten und/oder vorgeschalteten Ventil 120 beziehungsweise 122 geöffnet wird. Der Überdruck kann abgeblasen beziehungsweise der Unterdruck ausreichend vermindert werden, sodass bei weiter laufender Saugpumpe 66, 110 die Förderung komplett gestoppt wird.

Eine alternative Methode zur Fördersteuerung ist ebenfalls in FIG 6 dargestellt. Ein Strömungswiderstand 128 ist in den Luftkreislauf, genauer: im Saugzug, eingebaut. Bei dem in FIG 6 gezeigten Ausführungsbeispiel umfasst der Strömungswiderstand 128 ein bewegliches Element 130, das durch einen Aktuator 132 in den Saugzug eingefahren und aus diesem herausbewegt werden kann. Der Aktuator 132 wird durch die Steuereinheit 94, 95 angesteuert. Wird das Element 130 in den Saugzug hineinbewegt, so bilden sich durch die Querschnittsverengung Brennstoffcluster, sodass der Transport des Festbrennstoffs am Element 130 zum Erliegen kommt. Wird das Element 130 durch den Aktuator 132 aus dem Querschnitt des Saugzugs herausbewegt, löst sich der Cluster auf und der Brennstoff fließt wieder in Richtung zum Abscheider 72. Das Hinein- und Herausbewegen des Strömungswiderstands 128 in den Querschnitt kann in analoger Weise wie das Aus- und Einschalten der Brennstoffförderung wie oben beschrieben erfolgen.

Um ein Volumen in der Saugleitung 52, in der gestauter Brennstoff steht, gering zu halten, ist der Strömungswiderstand 128 in einem Abstand von maximal 1 m, insbesondere maximal 20 cm, weiter insbesondere maximal 10 cm, von der Saugöffnung der Saugleitung 58 entfernt angeordnet. Hierdurch kann der Stau in der Saugleitung kurz gehalten werden, so dass der Stau bei für eine erneute Brennstoffförderung leicht aufgelöst werden kann. Außerdem ist der Strömungswiderstand 128 so ausgeführt, dass die Transportluft zum Transport des Brennstoffs durch den Strömungswiderstand 128 hindurchtreten kann. Hierdurch kann der weitere Teil der Saugleitung 52 entleert werden, so dass die Auflösung des Staus weiter erleichtert wird, da der Rest der Saugleitung 52 vom Strömungswiderstand 128 bis zum Abscheider 72 entleert ist.

### Bezugszeichenliste

- 2: Warmluftofen
- 4: Brennkammer
- 6: Wärmetauscher
- 8: Konstruktion
- 10: Anhebeelement
- 12: Festbrennstoff
- 14: Fördereinheit
- 16: Rauchgaszuführung
- 18: Rauchgasgebläse
- 20: Rauchgasabführung
- 22: Umgebungsluftführung
- 24: Gehäuse
- 26: Umgebungsluftgebläse
- 28: Auslassöffnung
- 30: Einlassöffnung
- 32: Fördermotor
- 34: Brennstoffschnittstelle
- 36: Brennstoffzuführung
- 38: Abscheider
- 40: Rückbrandsicherung
- 42: Schleusenmotor
- 44: Primärluftgebläse
- 46: Festbrennstoffsaugförderanlage
- 48: Festbrennstoffaufnahmeeinheit
- 50: Unterdruckeinheit
- 52: Saugleitung
- 54: Druckleitung
- 56: Ausgang
- 58: Anschluss
- 60: Anschluss
- 62: Anschluss
- 64: Öffnung
- 66: Saugpumpe
- 68: Gehäuse
- 70: Druckanschluss
- 72: Abscheider
- 74: Gehäuse
- 76: Saugöffnung
- 78: Filter
- 80: Ventil
- 82: Verschlussdeckel
- 84: Bewegungsmechanik
- 86: Gewicht
- 88: Sensor
- 90: Verbindungselement
- 92: Verbindungselement
- 94: Steuereinheit
- 96: Füllstandsensor
- 98: Zwischenspeicher
- 100: Öffnung
- 102: Festbrennstoffsaugförderanlage
- 104: Festbrennstoffspeicher
- 108: Prallteller
- 110: Saugpumpe
- 112: Ventilmotor
- 114: Belüftungsöffnung
- 116: Belüftungsöffnung
- 118: Belüftungsöffnung
- 120: Ventil
- 122: Ventil
- 124: Festbrennstoffsaugförderanlage
- 126: Steuereinheit
- 128: Strömungswiderstand
- 130: Element
- 132: Aktuator
- 134: Öffnung

## Patentansprüche

1. Mobiler Warmluftofen (2) umfassend eine Brennkammer (4) und einen Wärmetauscher (6),
**gekennzeichnet,**
**durch** eine Festbrennstoffsaugförderanlage (46, 124) mit einem Luftkreislaufsystem umfassend eine Festbrennstoffaufnahmeeinheit (48), einen Festbrennstoffabscheider (72) und eine Unterdruckeinheit (50) mit einer als Seitenkanalverdichter ausgeführten Saugpumpe (110) zum Erzeugen eines Unterdrucks für einen pneumatischen Transport von Festbrennstoff (12) durch einen Teil des Luftkreislaufsystems.

2. Mobiler Warmluftofen (2) nach Anspruch 1,
**dadurch gekennzeichnet ,**
**dass** die Saugpumpe (110) am Festbrennstoffabscheider (72) angeordnet ist.

3. Mobiler Warmluftofen (2) nach Anspruch 1 oder 2,
**dadurch gekennzeichnet,**
**dass** der Festbrennstottabscheider (72) ein Zyklonabscheider ist.

4. Mobiler Warmluftofen (2) nach einem der vorhergehenden Ansprüche,
**dadurch gekennzeichnet,**
**dass** das Luftkreislaufsystem einen von der Unterdruckeinheit (50) bis zur Festbrennstoffaufnahmeeinheit (48) reichenden Saugzug aufweist, der eine in die Umgebung öffnende Belüftungsöffnung (114, 116) mit einem Ventil (80) aufweist, wobei die Belüftungsöffnung (114) eine untere Ausgabeöffnung des Festbrennstoffabscheiders (72) ist.

5. Mobiler Warmluftofen (2) nach Anspruch 4,
**dadurch gekennzeichnet,**
**dass** die Belüftungsöffnung (116) zwischen der Saugpumpe der Unterdruckeinheit (50) und dem Festbrennstoffabscheider (72) angeordnet ist.

6. Mobiler Warmluftofen (2) nach einem der vorhergehenden Ansprüche,
**dadurch gekennzeichnet,**
**dass** das Luftkreislaufsystem einen von der Unterdruckeinheit (50) bis zur Festbrennstoffaufnahmeeinheit (48) reichenden Gebläsezug aufweist, der eine in die Umgebung öffnende Belüftungsöffnung (118) mit einem Ventil aufweist.

7. Mobiler Warmluftofen (2) nach einem der vorhergehenden Ansprüche,
**dadurch gekennzeichnet,**
**dass** die Festbrennstoffaufnahmeeinheit (48) mehrere Einlässe (58, 60) zum Anschluss mehrerer Luftkreislaufsysteme aufweist und der Unterdruckeinheit (50) an der Festbrennstoffaufnahmeeinheit (48) angeordnet ist, wobei die mehreren Luftkreislaufsysteme gemeinsam durch die Saugpumpe (110) der Unterdruckeinheit (50) geführt sind, und wobei vor und nach einer Saugpumpe (110) der Unterdruckeinheit (50) jeweils ein Ventil (120) zum Schalten der Verdichterleistung auf einen der Luftkreislaufsysteme vorhanden sind.

8. Verfahren zum Fördern von Festbrennstoff (12) von einem Festbrennstoffspeicher (104) zu einem Warmluftofen (2), bei dem der Festbrennstoff (12) in einer am Festbrennstoffspeicher (104) angeordneten Festbrennstoffaufnahmeeinheit (48) durch einen von einer Saugpumpe (110) einer Unterdruckeinheit (50) erzeugten Sog aufgenommen, durch den Sog durch einen Saugzug eines Luftkreislaufsystems zu einem Festbrennstoffabscheider (72) transportiert und dort aus dem Luftkreislaufsystem abgeschieden wird,
**dadurch gekennzeichnet ,**
**dass** der Festbrennstoff (12) vom Festbrennstoffspeicher (104) zu einem mobilen Warmluftofen (2) gefördert und der Sog hierfür mit der als Seitenkanalverdichter ausgeführten Saugpumpe (110) erzeugt wird.

9. Verfahren nach Anspruch 8,
**dadurch gekennzeichnet,**
**dass** durch von der Saugpumpe (110) erzeugtem Sog mehrere Warmluftöfen (2) mit Festbrennstoff (12) versorgt werden und die Saugpumpe (110) anhand von Daten von mehreren Warmluftöfen (2) angesteuert wird, wobei die Warmluftöfen (2) jeweils einen Zwischenspeicher (98) mit einem Füllstandsmesser aufweisen und Zwischenspeicher (98) mit geringerem Füllstand vor Zwischenspeichern (98) mit höherem Füllstand beschickt werden.

10. Verfahren nach einem der Ansprüche 8 oder 9,
**dadurch gekennzeichnet,**
**dass** ein Transport des Festbrennstoffs (12) durch das Luftkreislaufsystem unterbrochen wird, während die Saugpumpe (110) in das Luftkreislaufsystem hinein pumpt.

11. Verfahren nach einem der Ansprüche 8 bis 10,
**dadurch gekennzeichnet,**
**dass** ein Zwischenspeicher des Brennstoffabscheiders (72) mit Festbrennstoff (12) beschickt wird, während der Beschickung eine Entladeöffnung (114) am unteren Ende des Zwischenlagers geschlossen bleibt, die Entladeöffnung (114) bei laufender Saugpumpe (110) geöffnet wird, hierdurch Luft in den Saugzug einströmt und der von der Saugpumpe (110) erzeugte Sog so weit reduziert wird, dass ein Brennstofftransport durch den Saugzug unterbrochen wird.

12. Verfahren nach einem der Ansprüche 8 bis 11,
**dadurch gekennzeichnet,**
**dass** während der Beschickung eines Zwischenlagers des Brennstoffabscheiders (72) ein Ventil im Überdruckbereich des Luftkreislaufsystems geöffnet wird, sodass von der Saugpumpe (110) erzeugte Druckluft in die Umgebung abgeblasen wird.

## Claims

1. Mobile hot air furnace (2) comprising a combustion chamber (4) and a heat exchanger (6),
**characterized by** a solid fuel suction conveying installation (46, 124) with an air circulation system comprising a solid fuel receiving unit (48), a solid fuel separator (72) and a vacuum unit (50) with a suction pump (110) designed as a side channel compressor for generating a negative pressure for a pneumatic transport of solid fuel (12) through a part of the air circulation system.

2. Mobile hot air furnace (2) according to claim 1, **characterized in that** the suction pump (110) is placed on the solid fuel separator (72).

3. Mobile hot air furnace (2) according to claim 1 or 2, **characterized in that** the solid fuel separator (72) is a cyclone separator.

4. Mobile hot air furnace (2) according to one of the preceding claims, **characterized in that** the air circulation system has a suction duct reaching from the vacuum unit (50) to the solid fuel receiving unit (48) that has a vent opening (114, 116) opening to the environment with a valve (80), wherein the vent opening (114) is a lower dispensing opening of the solid fuel separator (72).

5. Mobile hot air furnace (2) according to claim 4, **characterized in that** the vent opening (116) is placed between the suction pump of the vacuum unit (50) and the solid fuel separator (72).

6. Mobile hot air furnace (2) according to one of the preceding claims, **characterized in that** the air circulation system has a blower duct reaching from the vacuum unit (50) to the solid fuel receiving unit (48) that has a vent opening (118) opening to the environment with a valve.

7. Mobile hot air furnace (2) according to one of the preceding claims, **characterized in that** the solid fuel receiving unit (48) has several inlets (58, 60) for connecting several air circulation systems and the vacuum unit (50) to the solid fuel receiving unit (48), wherein the several air circulation systems are guided together through the suction pump (110) of the vacuum unit (50) and wherein a valve (120) for switching the compressor output to one of the air circulation systems exists respectively ahead and after a suction pump (110) of the vacuum unit (50).

8. Method for conveying solid fuel (12) from a solid fuel storage tank (104) to a hot air furnace (2) for which the solid fuel (12) is received in a solid fuel receiving unit (48) placed on the solid fuel storage tank (104) through a suction generated by a suction pump (110) of a vacuum unit (50), is conveyed by the suction through a suction duct of an air circulation system to a solid fuel separator (72) and from there is separated from the air circulation system,
**characterized in that** the solid fuel (12) is conveyed from the solid fuel storage tank (104) to a mobile hot air furnace (2) and the suction for this purpose is generated with the suction pump (110) designed as side channel compressor.

9. Method according to claim 8, **characterized in that** several hot air furnaces (2) are supplied with solid fuel (12) by the suction generated by the suction pump (110) and the suction pump (110) is controlled on the basis of data of several hot air furnaces (2), wherein each of the hot air furnaces (2) has an intermediate reservoir (98) with a level gauge and intermediate reservoirs (98) with a lower filling level are charged before intermediate reservoirs (98) with a higher filling level.

10. Method according to one of the claims 8 or 9, **characterized in that** a transport of the solid fuel (12) through the air circulation system is interrupted while the suction pump (110) pumps into the air circulation system.

11. Method according to one of the claims 8 to 10, **characterized in that** an intermediate reservoir of the solid fuel separator (72) is charged with solid fuel (2), a discharge opening (114) at the lower end of the intermediate storage remains closed during the charging, the discharge opening (114) opens when the suction pump (110) is running, air flows through this opening into the suction duct and the suction generated by the suction pump (110) is reduced to the extent that a fuel transport through the suction duct is interrupted.

12. Method according to one of the claims 8 to 11, **characterized in that** a valve opens in the overpressure range of the air circulation system during the charging of an intermediate storage so that compressed air generated by the suction pump (110) is blown off into the environment.

## Revendications

1. . Four mobile à air chaud (2) comprenant une chambre de combustion (4) et un échangeur thermique (6),
**caractérisé par** une installation de transport par aspiration de combustible solide (46, 124) avec un système de circulation d'air comprenant une unité de réception de combustible solide (48), un séparateur de combustible solide (72) et une unité de dépression (50) avec une pompe d'aspiration (110) réalisée comme un compresseur à canal latéral pour produire une dépression pour un transport pneumatique de combustible solide (12) à travers une partie du système de circulation d'air.

2. . Four mobile à air chaud (2) selon la revendication 1, **caractérisé en ce que** la pompe d'aspiration (110) est placée sur le séparateur de combustible solide (72).

3. . Four mobile à air chaud (2) selon la revendication 1 ou 2, **caractérisé en ce que** le séparateur de combustible solide (72) est un séparateur cyclonique.

4. . Four mobile à air chaud (2) selon l'une des revendications précédentes, **caractérisé en ce que** le système de circulation d'air présente un conduit d'aspiration, qui va de l'unité de dépression (50) à l'unité de réception de combustible solide (48), qui présente une ouverture de ventilation (114, 116), qui s'ouvre dans l'environnement, avec une soupape (80), l'ouverture de ventilation (114) étant une ouverture de distribution inférieure du séparateur de combustible solide (72).

5. . Four mobile à air chaud (2) selon la revendication 4, **caractérisé en ce que** l'ouverture de ventilation (116) est placée entre la pompe d'aspiration de l'unité de dépression (50) et le séparateur de combustible solide (72).

6. . Four mobile à air chaud (2) selon l'une des revendications précédentes, **caractérisé en ce que** le système de circulation d'air présente un conduit de soufflante, qui va de l'unité de dépression (50) à l'unité de réception de combustible solide (48), qui présente une ouverture de ventilation (118), qui s'ouvre dans l'environnement, avec une soupape.

7. . Four mobile à air chaud (2) selon l'une des revendications précédentes, **caractérisé en ce que** l'unité de réception de combustible solide (48) présente plusieurs entrées (58, 60) pour le raccord de plusieurs systèmes de circulation d'air et de l'unité de dépression (50) à l'unité de réception de combustible solide (48), les plusieurs systèmes de circulation d'air étant guidés conjointement à travers la pompe d'aspiration (110) de l'unité de dépression (50) et une soupape (120) pour mettre en circuit la puissance du compresseur sur l'un des systèmes de circulation d'air existant respectivement avant et après une pompe d'aspiration (110) de l'unité de dépression (50).

8. . Procédé pour le transport de combustible solide (12) d'un réservoir de combustible solide (104) à un four à air chaud (2) pour lequel le combustible solide (12) est reçu dans une unité de réception de combustible solide (48) placée sur le réservoir de combustible solide (104) par une aspiration produite par une pompe d'aspiration (110) d'une unité de dépression (50), est transporté par l'aspiration par un conduit d'aspiration d'un système de circulation d'air vers un séparateur de combustible solide (72) et de là séparé du système de circulation d'air,
**caractérisé en ce que** le combustible solide (12) est transporté du réservoir de combustible solide (104) à un four mobile à air chaud (2) et l'aspiration pour cela est produite avec la pompe d'aspiration (110) réalisée comme un compresseur à canal latéral.

9. . Procédé selon la revendication 8, **caractérisé en ce que** plusieurs fours à air chaud (2) sont alimentés en combustible solide (12) par l'aspiration produite par la pompe d'aspiration (110) et la pompe d'aspiration (110) est commandée à l'aide de données de plusieurs fours à air chaud (2), les fours à air chaud (2) présentant chacun un réservoir intermédiaire (98) avec un mesureur de niveau et les réservoirs intermédiaires (98) avec un niveau de remplissage plus faible étant chargés avant les réservoirs intermédiaires (98) avec un niveau de remplissage plus élevé.

10. . Procédé selon l'une des revendications 8 ou 9, **caractérisé en ce qu'**un transport du combustible solide (12) à travers le système de circulation d'air est interrompu pendant que la pompe d'aspiration (110) pompe dans le système de circulation d'air.

11. . Procédé selon l'une des revendications 8 à 10, **caractérisé en ce qu'**un réservoir intermédiaire du séparateur de combustible (72) est chargé en combustible solide (12), qu'une ouverture de déchargement (114) à l'extrémité inférieure du stockage intermédiaire reste fermée pendant le chargement, que l'ouverture de déchargement (114) s'ouvre lorsque la pompe d'aspiration (110) marche, que de l'air afflue par ici dans le conduit d'aspiration et l'aspiration produite par la pompe d'aspiration (110) est tellement réduite qu'un transport de combustible à travers le conduit d'aspiration est interrompu.

12. . Procédé selon l'une des revendications 9 à 11, **caractérisée en ce qu'**une soupape s'ouvre dans le domaine de surpression du système de circulation d'air pendant le chargement d'un stockage intermédiaire du séparateur de combustible (72) si bien que de l'air comprimé produit par la pompe d'aspiration (110) est évacué par soufflage dans l'environnement.
